# EUROPÄISCHE PATENTSCHRIFT

(11) **EP 2 897 764 B1**
(45) Veröffentlichungstag und Bekanntmachung des Hinweises auf die Patenterteilung: **14.12.2016**
(21) Anmeldenummer: 13750304.1
(22) Anmeldetag: 13.08.2013
(51) Int. Cl.: B23Q 1/52, B23Q 1/66, B23Q 7/14

(54) **WERKSTÜCKWECHSLER UND WERKZEUGMASCHINE MIT EINEM SOLCHEN WERKSTÜCKWECHSLER**
WORKPIECE REPLACEMENT DEVICE AND MACHINE TOOL WITH SUCH A WORKPIECE REPLACEMENT DEVICE
DISPOSITIF DE CHANGEMENT DE PIÈCE ET MACHINE OUTIL COMPRENANT LE DISPOSITIF DE CHANGEMENT DE PIÈCE

(30) Priorität: 23.08.2012 DE 102012107785
(43) Veröffentlichungstag der Anmeldung: 29.07.2015
(73) Patentinhaber: Chiron-Werke GmbH & Co. KG, 78532 Tuttlingen (DE)
(72) Erfinder: PRUST, Dirk, 78532 Tuttlingen (DE); EBLE, Michael, 78567 Fridingen (DE)
(74) Vertreter: Witte, Weller & Partner Patentanwälte mbB
(86) Internationale Anmeldenummer: PCT/EP2013/066883
(87) Internationale Veröffentlichungsnummer: WO 2014/029661

(56) Entgegenhaltungen:
- EP-A1- 1 122 027
- DE-A1- 19 907 617
- DE-C2- 3 505 138

## Beschreibung

Die vorliegende Erfindung betrifft einen Werkstückwechsler für eine Werkzeugmaschine mit einer Werkzeugspindel, in die Werkzeuge zur Bearbeitung von Werkstücken einspannbar sind, mit zwei parallel zueinander angeordneten Rädern, die um eine Drehachse in zumindest zwei Winkelpositionen drehbar sind, zumindest zwei Schwenktischen zum Aufspannen von Werkstücken, wobei die Schwenktische zwischen den Rädern angeordnet und an diesen jeweils um eine Schwenkachse schwenkbar gelagert sind, die parallel zu der Drehachse verläuft, und wobei sich in jeder Winkelposition einer der Schwenktische in seiner Arbeitsposition befindet, in der aufgespannte Werkstücke mit den Werkzeugen bearbeitbar sind.

Ein derartiger Werkstückwechsler ist beispielsweise aus der DE 35 05 138 C2 bekannt.

Der bekannte und andere Werkstückwechsler können prinzipiell mit vertikalen oder horizontalen Werkzeugspindeln eingesetzt werden, wobei die Werkzeugspindeln relativ zu dem Werkstückwechsler in den drei orthogonalen Raumachsen X, Y und Z verfahrbar sind. Ferner kann die Arbeitsspindel um eine der Raumachsen schwenkbar gelagert sein.

Auf den zumindest zwei Schwenktischen sind Vorrichtungen angeordnet, mit denen die zu bearbeitenden Werkstücke eingespannt werden, so dass sie zur Bearbeitung zur Verfügung stehen.

Während einer der Schwenktische in seiner Arbeitsposition ist, in der das auf ihm aufgespannte Werkstück bearbeitet wird, befindet sich der andere Schwenktisch in einer Position, in der ein fertig bearbeitetes Werkstück entnommen und ein neu zu bearbeitendes Werkstück aufgespannt werden kann.

Die beiden Schwenktische sind jeweils schwenkbar zwischen den Rädern gelagert, so dass ein aufgespanntes Werkstück sowohl in der Arbeitsposition als auch in der Position, in der Werkstücke gewechselt werden, nach oben weisen kann. Dazu ist es erforderlich, dass bei jedem Werkstückwechsel jeder Schwenktisch um 180° zwischen den Rädern gedreht wird.

Die Schwenkachse der Schwenktische kann darüber hinaus als weitere Maschinenachse verwendet werden, so dass während der Bearbeitung der Werkstücke diese in unterschiedlicher Winkelausrichtung um die X-Achse herum dem Werkzeug dargeboten werden können.

Zur Erhöhung der Flexibilität der Bearbeitung kann die Werkzeugspindel um eine quer zu der Schwenkachse verlaufende Achse geschwenkt werden, so dass auch aus dieser Richtung eine schräge Bearbeitung der Werkstücke möglich ist.

In der Regel sind die drei orthogonalen Achsen in der Werkzeugspindel realisiert, die in einem Spindelkopf angeordnet ist, der ggf. schwenkbar und in Richtung der Längsachse des Werkzeuges, also der Z-Achse verstellbar an einem Ständer angeordnet ist. Dieser Ständer ermöglicht ein Verfahren in den beiden anderen Raumrichtungen, also in X- und Y-Richtung.

Es ist auch bekannt, bei der Bearbeitung von sehr langen Strukturteilen den Werkstückwechsler in Richtung der Schwenkachsen sowie der Drehachse der Räder, also in X-Richtung gegenüber der Werkzeugspindel zu verfahren, also zumindest eine Achse im Werkstück zu realisieren.

Wenn das auf dem in Arbeitsposition befindlichen Schwenktisch aufgespannte Werkstück bearbeitet wurde, werden die Räder um die Drehachse um 180° gedreht, so dass sich jetzt der andere Schwenktisch in seiner Arbeitsposition befindet und das so eben bearbeitete Werkstück gegen ein noch zu bearbeitendes Werkstück ausgetauscht werden kann.

Zu diesem Werkstückwechsel werden die beiden Räder synchron miteinander um 180° gedreht, so dass sie von ihrer ersten Winkelposition, in der der eine Schwenktisch in seiner Arbeitsposition ist, in ihre andere Winkelposition gedreht werden, in der der andere Schwenktisch sich in Arbeitsposition befindet.

Es ist auch bekannt, derartige Werkstückwechsler nicht mit zwei sondern beispielsweise mit vier Schwenktischen auszustatten, so dass die Schwenktische zueinander um 90° versetzt an den Rädern angeordnet sind. Entsprechend hat der Werkstückwechsler dann vier ausgewiesene Winkelpositionen für seine Räder, in denen sich jeweils einer der Schwenktische in seiner Arbeitsposition befindet.

Obwohl sich die bekannten Werkstückwechsler in vielen Einsatzfällen bewährt haben, bauen die damit ausgerüsteten Werkzeugmaschinen sehr groß, insbesondere dann, wenn auf ihnen große Strukturteile bearbeitet werden sollen, die zudem eine entsprechende Länge in x-Richtung von beispielsweise 3 m aufweisen.

Insbesondere dann, wenn die Bearbeitung der Werkstücke mit einer Doppelspindel erfolgen soll, in die also zwei Bearbeitungswerkzeuge eingesetzt sind, die unabhängig voneinander das auf dem in der Arbeitsposition befindliche Werkstück bearbeiten, werden die gesamten Abmaße des bekannten Werkstückwechseltisches so groß, dass eine Werkzeugmaschine, in deren Kabine oder Gehäuse der Werkstückwechsler aufgestellt wird, sehr voluminös wird.

Vor diesem Hintergrund liegt der vorliegenden Erfindung die Aufgabe zugrunde, den bekannten Werkstückwechsler derart weiterzubilden, dass er bei einer großen Aufspannfläche auf den Werkstücktischen sowie bei einem konstruktiv einfachen Aufbau insgesamt geringere Abmaße aufweist und einen schnellen Werkstückwechsel ermöglicht.

Erfindungsgemäß wird diese Aufgabe bei dem bekannten Werkstückwechsler dadurch gelöst, dass die beiden Räder an ihrem Rand gelagert sind.

Die Erfinder der vorliegenden Anmeldung haben nämlich erkannt, dass ein großes Problem bekannter Werkstückwechsler darin liegt, dass bei einer Konstruktionsvariante die Schwenkachse in einer zentral durch die Räder verlaufenden Welle liegt, wozu für die Welle dort auch entsprechende Drehlager vorgesehen sind.

Die die Schwenkachse bildende Welle verläuft zwischen den Schwenktischen von einem Rad zu dem anderen, um dafür zu sorgen, dass die beiden Räder synchron gedreht werden, was für die Genauigkeit der Positionierung der Schwenktische unabdingbar ist. Ferner sorgt das synchrone Drehen der Räder dafür, dass sich die Schwenktische selbst nicht verkanten oder verwinden, die an den beiden Rädern drehbar gelagert sind.

Diese zentrale Welle, an der die beiden Räder gelagert sind, ist in entsprechenden Aufnahmen oder Böcken aufgefangen, wobei an einer dieser Aufnahmen von außen der Motor zum Drehen der Räder vorgesehen ist.

Diese Konstruktion führt dazu, dass der gesamte Werkstückwechsler insgesamt in x-Richtung sehr breit ist, weil zusätzlich zu der Breite der Schwenktische noch die Dicke der Räder sowie der Motor und die beiden Lagerungen für die Räder hinzukommen.

Ferner führt die zentral durch die beiden Räder verlaufende Welle dazu, dass die beiden Schwenktische zueinander einen bestimmten Abstand aufweisen müssen, damit beim Drehen der Schwenktische um ihre jeweilige Schwenkachse die Störkontur der aufgespannten Werkstücke nicht mit der zentralen Welle kollidiert.

Bei anderen Konstruktionsvarianten sind beide Räder angetrieben, so dass ggf. auf die zentrale Welle verzichtet werden kann, dafür aber an beiden Rädern entsprechend in x-Richtung breit bauende Antriebe vorgesehen sind.

Die gesamte Breite der bekannten Werkstückwechsler könnte nun dadurch reduziert werden, dass der oder jeder Antriebsmotor nicht zentral angeordnet sondern außerhalb der Kontur des Rades vor dem Werkstückwechsler positioniert wird. Dies führt jedoch dazu, dass die Tiefe des so modifizierten Werkstückwechslers noch einmal zunimmt.

Die Erfinder der vorliegenden Anmeldung sind jetzt einen völlig anderen Weg gegangen, indem sie die beiden Räder an ihrem Rand lagern.

Dadurch entfällt zum einen die zentrale Welle, so dass bei gleichen Störkonturen der auf den Schwenktischen aufgespannten Werkstücke die beiden Schwenktische selbst zueinander einen geringeren Abstand aufweisen können, weil nämlich die zentrale Welle fehlt. Dies ermöglicht Räder mit geringerem Durchmesser als im Stand der Technik.

Ferner benötigt der neue Werkstückwechsler keine zentralen Lager, an denen die Räder gehalten werden. Auch dies reduziert noch einmal die Breite des Werkstückwechslers in der X-Richtung.

Darüber hinaus ermöglicht es die erfindungsgemäße Lagerung der Räder an ihrem Rand, den Drehantrieb unmittelbar am Rand angreifen zu lassen, was viele konstruktive Möglichkeiten bietet, den Drehantrieb an dem neuen Werkstückwechsler zu positionieren.

Die der Erfindung zugrunde liegende Aufgabe wird auf diese Weise vollkommen gelöst.

Dabei ist es bevorzugt, wenn jedes Rad eine zentrisch zu der Drehachse verlaufende ringförmige Führungsschiene aufweist, die in Führungsschuhen läuft, die an einem Strukturelement der Werkzeugmaschine befestigt sind, wobei die Führungsschuhe vorzugsweise mit einem auf die Führungsschiene bezogenen Überdeckungswinkel von kleiner 180° an dem Strukturelement befestigt sind.

Diese Maßnahme ist insbesondere konstruktiv von Vorteil, denn nur ein geringer Bereich des gesamten Umfanges des jeweiligen Rades wird für die Lagerung benötigt, so dass der restliche Bereich des Umfanges des Rades von Strukturteilen des Werkzeugwechslers frei ist, und dort nicht mehr Raum beansprucht, als es dem Durchmesser des Rades entspricht.

Die Führungsschuhe stellen dabei sozusagen das Auflager für das jeweilige Rad dar, wobei die Führungsschiene wie eine kurze Zylinderwand ausgebildet ist, die außen am Umfang des Rades verläuft und sich in Richtung der Drehachse erstreckt.

Wenn die ringförmigen Führungsschienen der beiden Räder aufeinander zu weisen, bedeutet dies ferner, dass die Führungsschuhe sowie die Führungsschienen in dem Raum zwischen den beiden Rädern angeordnet sind, was noch einmal zu einer Reduzierung der Breite des neuen Werkstückwechslers beiträgt.

Dabei ist es bevorzugt, wenn jedes Rad über einen an seiner ringförmigen Umfangsfläche angreifenden Drehantrieb um die Drehachse verdrehbar ist, wobei vorzugsweise jedes Rad mit einem zumindest teilweise längs seiner Umfangsfläche verlaufenden Zugmittelelement versehen ist, das mit einem Antriebsritzel des Drehantriebs zusammenwirkt, wobei weiter vorzugsweise das Zugmittelelement mit seinen beiden Enden an der Umfangsfläche des Rades festgelegt ist und das Antriebsritzel umschlingt.

Unter einem Zugmitteellement wird vorliegend ein Element verstanden, das als Zahnriemen, Kette, Seil, Keilriemen oder vergleichbares Antriebselement ausgebildet ist,

Bei dieser Maßnahme ist von Vorteil, dass auch der Drehantrieb unmittelbar außen am Rand der Räder angreift, wobei ein geringeres Drehmoment am Antrieb benötigt wird, um ein Rad außen an seinem Rand zu verdrehen, als wenn der Drehantrieb unmittelbar auf der zentralen Welle sitzen würde.

Darüber hinaus ist ein Zugmittelantrieb konstruktiv von Vorteil, weil er schmal baut und einfach montiert und gewartet werden kann.

Alternativ wäre es auch möglich, unmittelbar auf der Umfangsfläche der Räder eine Stirnverzahnung vorzusehen, und das Rad unmittelbar über ein Ritzel anzutreiben.

Ein Zugmittelantrieb, bei dem das eine Ende des Zugmittelelementes an der Umfangsfläche des Rades angeordnet ist, und das Zugmittelelement sich dann längs des Umfanges, also der Umgangsfläche des Rades erstreckt, dann zu einem Antriebsritzel verläuft, dieses umschlingt und zurück zu dem Rad geht, wo das zweite Ende des Zugmittelelementes ebenfalls auf der Umfangsfläche befestigt ist, stellt einen konstruktiv sehr einfachen und laufruhigen Antrieb dar. Dabei kann es erforderlich sein, das Zugmittelelement noch unter einer Spannrolle durchzuführen, um es über einen möglichst großen Bereich des Umfanges des Rades, also der ringförmigen Umfangsfläche, an das Rad anzulegen.

Bei dieser Konstruktion ist es dann im Gegensatz zu dem Antrieb über die stirnseitige Verzahnung zwar nicht mehr möglich, die Räder permanent in eine Richtung zu drehen, aber für den Werkstückwechsel ist es völlig ausreichend, wenn die beiden Rädern um 180° gegenüber einer Grundposition hin- und hergedreht werden können.

Dabei ist es weiter bevorzugt, wenn der Drehantrieb einen Drehmotor aufweist, der eine Antriebswelle antreibt, auf der zwei Antriebsritzel sitzen, über die die beiden Räder um die Drehachse angetrieben werden.

Auch diese Maßnahme ist konstruktiv von Vorteil, denn auf diese Weise werden beide Räder synchron verdreht, auch wenn anders als im Stand der Technik keine zentrale Antriebswelle vorgesehen ist, sondern eine Antriebswelle, die jetzt außerhalb der Kontur der Räder vor oder unter dem Werkstückwechsler angeordnet sein kann.

Diese Art des Antriebes vergrößert also die Tiefe des neuen Werkstückwechslers nicht über den Durchmesser der Räder hinaus.

Weiter ist es bevorzugt, wenn zumindest einem der beiden Räder eine Indexiervorrichtung zugeordnet ist, die das Rad in den Winkelpositionen fixiert.

Bei dieser Maßnahme ist von Vorteil, dass zumindest eines der beiden Räder in den Winkelpositionen, in denen sich jeweils ein Schwenktisch in seiner Arbeitsposition befindet, fixiert wird, so dass während der Bearbeitung der Werkstücke die Schwenktische durch die Indexiervorrichtung in ihrer Position gehalten werden und sich nicht verdrehen können.

Insbesondere dann, wenn das Drehen der Räder über einen Zugmittelantrieb erfolgt, sorgt die Indexiervorrichtung auf konstruktiv einfache Weise dafür, dass die Räder nicht aus der Arbeitsposition herausgedreht werden können.

Besonders bevorzugt ist es, wenn an jedem der beiden Räder eine entsprechende Indexiervorrichtung vorgesehen ist.

Dabei ist es bevorzugt, wenn die Indexiervorrichtung zwei an dem jeweiligen Rad angeordnete, mitfahrende Formschlusselemente umfasst, die jeweils einer Arbeitsposition eines Schwenktisches zugeordnet sind, und denen ein ortsfestes Formschlusselement zugeordnet ist, mit dem das mitfahrende Formschlusselement verriegelbar ist, dessen zugeordneter Schwenktisch sich in seiner Arbeitsposition befindet.

Diese Maßnahme sorgt für einen konstruktiv einfachen Aufbau der Indexiervorrichtung, wobei die Indexiervorrichtung auch einfach justierbar ist. Es müssen nämlich entweder nur die mitfahrenden oder die ortsfesten Formschlusselemente justierbar sein.

Wenn der Werkstückwechsler zwei Schwenktische enthält, werden an zwei diametral gegenüberliegenden Positionen entsprechende Formschlusselemente an dem Rad oder den Rädern angeordnet. Diese mitfahrenden Formschlusselemente tauschen bei jedem Werkstückwechsel ihre Position aus, werden also ebenfalls um 180° vor- oder zurückgedreht.

Zusätzlich ist ein ortsfestes Formschlusselement vorgesehen, das beispielsweise an einem Strukturelement der Werkzeugmaschine angeordnet sein kann. Dieses ortsfeste Formschlusselement ist so angeordnet, dass es immer dann mit einem der mitfahrenden Formschlusselemente verriegelt werden kann, wenn sich der dem jeweiligen mitfahrenden Formschlusselement zugeordnete Schwenktisch in seiner Arbeitsposition befindet.

Die Anordnung der mitfahrenden Formschlusselemente und die sich daraus ergebende Anordnung des einen ortsfesten Formschlusselementes pro Rad kann dabei so gewählt werden, dass die Indexiervorrichtung geometrisch geeignet an dem Werkstückwechsler untergebracht wird, ohne dessen Breite, Tiefe oder Höhe merklich zu beeinträchtigen.

Das ortsfeste Formschlusselement kann beispielsweise so angeordnet sein, dass es in Richtung der Drehachse der Räder verschiebbar ist und so auf die mitfahrenden Formschlusselemente aufgeschoben und mit diesen verriegelt werden kann, wenn eine Arbeitsposition eines Schwenktisches erreicht ist.

Bevorzugt ist es jedoch, wenn die Indexvorrichtung weiter ein längs verschieblich gelagertes Formschlusselement umfasst, das mit dem mitfahrenden Formschlusselement, dessen zugeordneter Schwenktisch sich in seiner Arbeitsposition befindet, und dem ortsfesten Formschlusselement in Eingriff bringbar ist.

Bei dieser Maßnahme ist von Vorteil, dass das ortsfeste Formschlusselement, das also die Referenzposition für die Arbeitsposition definiert, auch in Richtung der Drehachse nicht bewegbar sein muss, also tatsächlich ein stationäres Formschlusselement ist.

Das ortsfeste oder stationäre Formschlusselement kann auf diese Weise hochgenau in Bezug auf die Arbeitsposition justiert werden. In der Arbeitsposition eines Schwenktisches befindet sich dann das zugeordnete mitfahrende Formschlusselement neben dem stationären oder ortsfesten Formschlusselement, so dass dann das verschieblich gelagerte Formschlusselement auf beide Formschlusselemente aufgeschoben werden kann, und diese so miteinander verriegelt.

Wenn das mitfahrende Formschlusselement jeweils außen am Rand eines Rades angeordnet ist, kann auf diese Weise eine sehr feste Arretierung des Rades in den jeweiligen Arbeitspositionen der Schwenktische realisiert werden.

Dabei ist es bevorzugt, wenn die Formschlusselemente als Zahnstangensegmente ausgebildet sind.

Hier ist von Vorteil, dass durch die Teilung der Zähne der Zahnstangensegmente eine sehr hohe Auflösung in der relativen Lage der Zahnstangensegmente zueinander und damit eine sehr genaue Positionierung der Räder möglich ist.

Weiter ist es bevorzugt, wenn zumindest an einem der beiden Räder eine sich beim Drehen der Räder um die Drehachse auf- bzw. abwickelnde Energiekette vorgesehen ist, über die der Werkstückwechsler mit Energie und/oder Medien versorgt wird.

Auch diese Maßnahme sorgt dafür, dass die Baugröße des neuen Werkstückwechslers reduziert wird, denn auch für die Zufuhr von elektrischer Energie, Hydrauliköl oder Pneumatikluft sowie für die Übertragung von Mess- und Steuersignalen ist es nicht erforderlich, Bauteile in der Drehachse der Räder anzuordnen, vielmehr kann die Energiekette im äußeren Bereich des Rades, aber innerhalb seines Umfanges angeordnet sein, und sich beim Hin- und Herschwenken der Räder entsprechend auf- und abwickeln.

Diese Maßnahme ist insbesondere dann von Vorteil, wenn jedem Schwenktisch ein Schwenkantrieb zugeordnet ist, der an einem der beiden Räder gelagert ist.

Weil die Schwenktische selbst sehr starr wie eine Wiegenvorrichtung ausgebildet sein können, ist es nämlich lediglich erforderlich, die Schwenktische nur an einem Ende der Schwenkachse, also an einem Rad anzutreiben. Die dafür benötigten Schwenkantriebe bauen sehr viel kleiner als ein zentral angeordneter Schwenkantrieb für den gesamten Werkstückwechsler, so dass die Schwenkantriebe die gesamte Breite des neuen Werkstückwechslers kaum oder nicht merklich beeinträchtigen. Zudem ist es möglich, die Schwenkantriebe teilweise in den Rädern selbst zu integrieren.

Über die Energiekette werden nun die Schwenkantriebe der Schwenktische mit Energie versorgt und angesteuert.

Für den Fall, dass auf den Schwenktischen automatisch betätigte Vorrichtungen, Spülvorrichtung, Messfühler, etc. vorgesehen sind, müssen auch die Schwenktische selbst mit Energie und Medien versorgt werden.

Vor diesem Hintergrund ist es weiter bevorzugt, wenn an dem einen Rad für jeden Schwenktisch eine sich beim Schwenken der Schwenktische um ihre jeweilige Schwenkachse auf- bzw. abwickelnde Energiekette vorgesehen ist, über die Vorrichtungen auf dem jeweiligen Schwenktisch mit Energie und/oder Medien versorgt werden.

Weiter ist es bevorzugt, wenn zwischen den Rädern zumindest eine Trennwand vorgesehen ist, die den in Arbeitsposition befindlichen Schwenktisch von dem zumindest einen anderen Schwenktisch abtrennt.

Bei dieser Maßnahme ist von Vorteil, dass durch ein Strukturelement zwischen den Schwenktischen, das sehr dünnwandig ausgebildet sein kann, eine Versteifung der beiden Räder parallel zueinander möglich ist, was die Genauigkeit erhöht, mit der die Schwenktische in Arbeitspositionen positioniert werden können.

Wenn zwischen den Rädern eine mit den Rädern verbundene Trennwand vorgesehen ist, so sorgt dies für eine so hinreichende Steifigkeit der aus den Rädern und den Schwenktischen bestehenden Schwenkvorrichtung, dass die beiden Räder an ihrem Rand nur über einen kleinen Winkelbereich geführt werden müssen.

Die Erfinder der vorliegenden Anmeldung haben erkannt, dass es ausreichend ist, wenn die Räder an ihrem Rand über einen Winkelbereich von ca. 120° geführt werden, die übrigen 240° des Randes sind somit frei und definieren sozusagen da die äußere Kontur des neuen Werkstückwechslers.

Hier ist weiter von Vorteil, dass das Gestell der Werkzeugmaschine nur in diesem Bereich Strukturelemente zur Lagerung der Räder aufweisen muss.

Wenn die Räder dagegen bereits durch die Schwenktische und die sonstige Führung an ihrem Rand bereits hinreichend ausgesteift sind, ist es nicht zwingend erforderlich, dass die Trennwand mit den beiden Rädern verbunden ist.

In diesem Fall kann die Trennwand so angeordnet werden, dass sie lediglich der Abdeckung des in Arbeitsposition befindlichen Schwenktisches dient, so dass während der Bearbeitung des dort aufgespannten Werkstückes entstehende Späne und Bohr- sowie Kühlwasser nicht aus dem Arbeitsbereich der Werkzeugmaschine herausgelangen und somit Bedienungspersonal beeinträchtigen oder gar gefährden, das an dem anderen Schwenktisch ein bearbeitetes Werkstück gegen einen Rohling austauscht.

Weiter ist es bevorzugt, wenn in zumindest einem der beiden Räder für jeden Schwenktisch ein Fenster vorgesehen ist, durch das der Schwenktisch beobachtbar ist, wobei das Fenster vorzugsweise verschiebbar an dem Rad gelagert ist.

Bei dieser Maßnahme ist zum einen von Vorteil, dass der Bearbeitungsprozess jederzeit von außen beobachtet werden kann, wozu dann auch in dem Gehäuse der Werkzeugmaschine entsprechende Fenster oder Scheiben vorgesehen werden.

Ein besonderer Vorteil des verschiebbar an dem Rad gelagerten Fensters ist darin zu sehen, dass jederzeit von der Seite her in den Arbeitsraum der Werkzeugmaschine eingegriffen werden kann, so dass auf entsprechende Fenster oder Öffnungen in der Trennwand verzichtet werden kann. Auf diese Weise kann die Trennwand sehr dünn ausgelegt werden, was noch einmal zu einer Verringerung der Baugröße des neuen Werkstückwechslers führt.

Das Öffnen der Fenster an dem Rad kann dadurch bewirkt werden, dass diese Fenster mit einem Fenster in dem Gehäuse des Rades immer dann gekoppelt sind, wenn sich ein Schwenktisch in seiner Arbeitsposition befindet.

Dabei ist es bevorzugt, wenn an dem an dem Rad verschiebbar gelagerten Fenster ein Anschlag vorgesehen ist, der mit einem Sperrteil zusammenwirkt, das ein Verschieben des Fensters nur zulässt, wenn sich die Räder in einer ihrer ausgewiesenen Winkelpositionen befinden.

Hier ist von Vorteil, dass die Fenster beim Drehen der Räder nicht hin- und herfahren können, wenn beispielsweise die Führungen der Fenster Lose aufweisen.

Dabei ist es bevorzugt, wenn das Sperrteil ortsfest an einer Gehäusewand angeordnet und als Ring ausgebildet ist, an dessen Umfangsfläche der Anschlag beim Drehen der Räder anliegt, wobei in dem Ring zumindest eine Nut für den Anschlag vorgesehen ist, die ein Verschieben des Fensters ermöglicht, wenn sich die Räder in einer Winkelposition befinden.

Auf diese Weise wird eine sehr einfache Sperrvorrichtung realisiert. Nur dann, wenn sich ein Schwenktisch in seiner Arbeitsposition befindet, liegt der Anschlag gegenüber der Nut in dem Ring, so dass das Fenster verfahren werden kann.

Vor diesem Hintergrund betrifft die vorliegende Erfindung ferner eine Werkzeugmaschine mit einer Werkzeugspindel, in die Werkzeuge zur Bearbeitung von Werkstücken einspannbar sind, wobei die Werkzeugmaschine mit dem neuen Werkstückwechsler ausgestattet ist.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der beigefügten Zeichnung dargestellt und werden in der nachfolgenden Beschreibung näher erläutert. Es zeigen:
- Fig. 1: eine schematische Seitenansicht einer Werkzeugmaschine, die mit dem neuen Werkstückwechsler ausgestattet ist;
- Fig. 2: eine schematische perspektivische Ansicht auf den Werkstückwechsler aus Fig. 1;
- Fig. 3: eine Draufsicht auf den Werkstückwechsler aus Fig. 2, in schematischer und nicht maßstabsgetreuer Darstellung;
- Fig. 4: eine Ansicht des Werkstückwechslers aus Fig. 3 längs der Linie IV-IV aus Fig. 3;
- Fig. 5: eine Ansicht auf den Werkstückwechsler aus Fig. 3 längs der Linie V-V aus Fig. 3;
- Fig. 6: eine Ansicht des Werkstückwechslers aus Fig. 3 längs der Linie VI-VI aus Fig. 3;
- Fig. 7: eine Schnittdarstellung des in Fig. 6 gezeigten Rades längs der Linie VII-VII aus Fig. 6; und

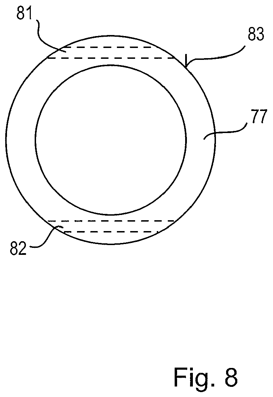

- Fig. 8: eine vergrößerte Darstellung des Sperrelementes, das mittig in Fig. 6 gezeigt ist.

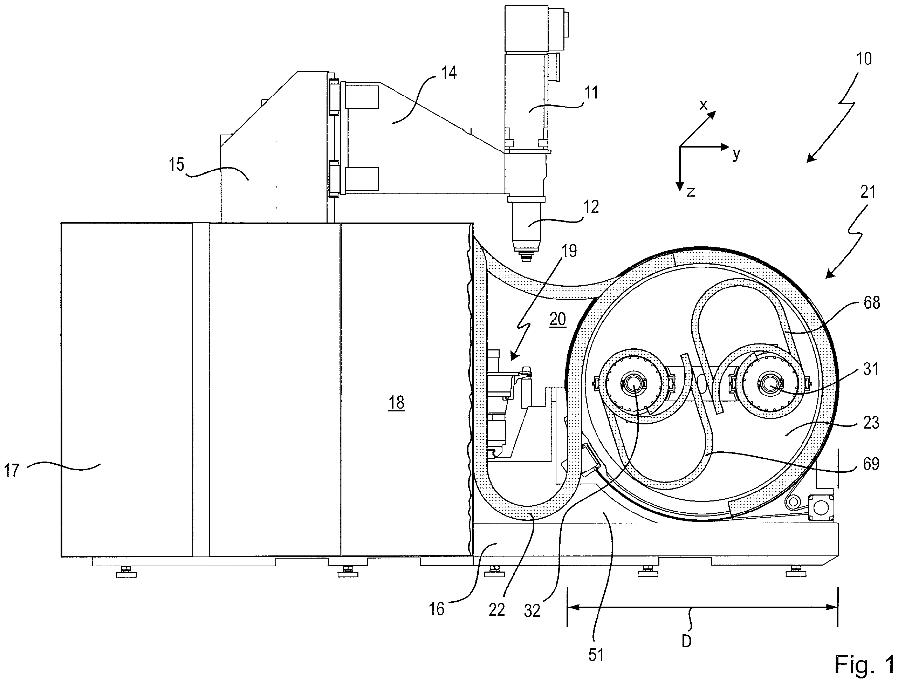

In Fig. 1 ist in einer schematischen und nicht maßstabsgetreuen Seitenansicht eine Werkzeugmaschine 10 gezeigt, an der eine Werkzeugspindel 11 vorgesehen ist, in die ein Werkzeug 12 eingespannt ist.

Die Werkzeugspindel 11 ist drehbar an einem Spindelkopf 14 gelagert, der in Richtung der Drehachse des Werkzeuges 12, also in Z-Richtung höhenverstellbar an einem Fahrständer 15 gelagert ist. Der Fahrständer 15 wiederum ist in den beiden anderen orthogonalen Raumrichtungen, also in der X- und Y-Richtung verschiebbar an einem Gestell 16 der Werkzeugmaschine 10 gelagert.

Die Werkzeugmaschine 10 weist ferner ein Gehäuse 17 auf, das sämtliche strukturellen Komponenten umgibt. In Fig. 1 ist das Gehäuse 17 lediglich durch eine Gehäusewand 18 repräsentiert, die zudem weggebrochen gezeigt ist, so dass ein Werkzeugmagazin 19 erkennbar ist, in dem Werkzeuge 12 vorrätig gehalten werden, die beispielsweise im Pick-up-Verfahren in die Werkzeugspindel 11 eingewechselt werden können.

Auf diese Weise ist ein in die Werkzeugspindel 11 eingespanntes Werkzeug in allen drei Raumrichtungen X, Y, Z in einem bei 20 angedeuteten Arbeitsraum verfahrbar, in den in Fig. 1 von rechts teilweise ein Werkstückwechsler 21 hineinragt, der trommelartig ausgebildet ist.

In noch zu beschreibender Weise ist der Werkstückwechsler 21 um die X-Achse drehbar angeordnet, weshalb er über eine Energiekette 22 mit elektrischer Energie, Medien, sowie Steuersignalen versorgt wird.

In an sich bekannter Weise, wickelt sich die Energiekette 22 beim Verdrehen des Werkstückwechslers 21 um die X-Achse auf bzw. ab.

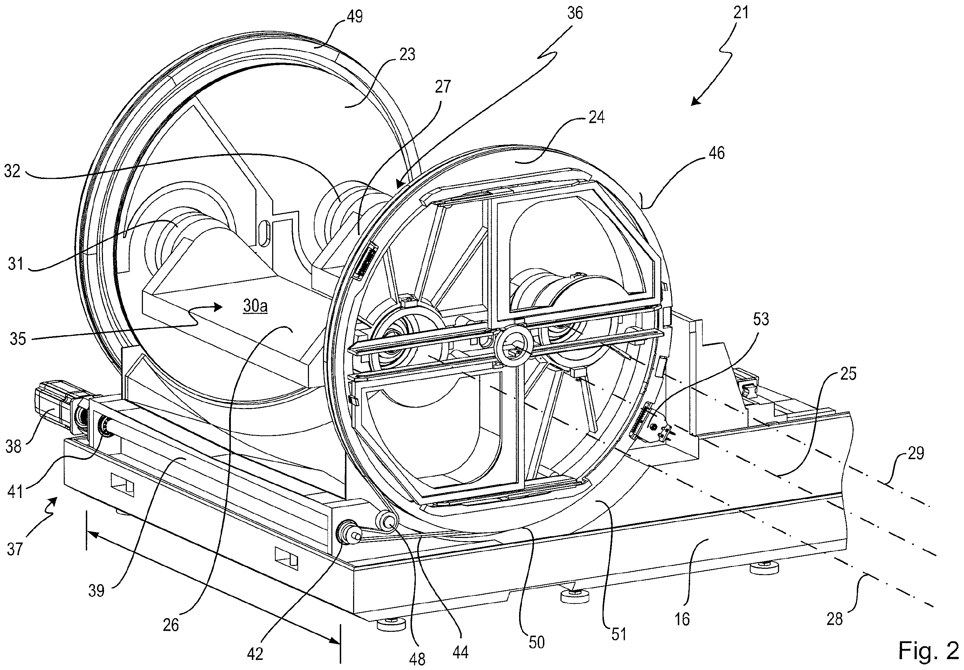

In Fig. 2 ist der Werkstückwechsler 21 aus Fig. 1 in einer schematischen, perspektivischen Darstellung gezeigt. Der Werkstückwechsler 21 umfasst zwei Räder 23 und 24, die um eine Drehachse 25 drehbar sind, die der X-Achse aus Fig. 1 entspricht.

Die Darstellung in Fig. 2 ist so getroffen, dass das in Fig. 1 vordere Rad 23 in Fig. 2 hinter dem Rad 24 gezeigt ist.

Zwischen den beiden Rädern 23 und 24 sind zwei Schwenktische 26 und 27 vorgesehen, die jeweils um eine Schwenkachse 28 bzw. 29 verschwenkbar sind, die parallel zu der Drehachse 25 verlaufen.

Die Schwenktische 26 und 27 sind wie Wiegenvorrichtungen ausgebildet, sie umfassen also jeweils eine flache Platte 30a mit zwei Wangen 30, von denen in Fig. 2 die hintere Wange an einem Schwenkantrieb 31 bzw. 32 befestigt ist, über den die Schwenktische 26 und 27 zumindest um 180° hin- und hergeschwenkt werden können.

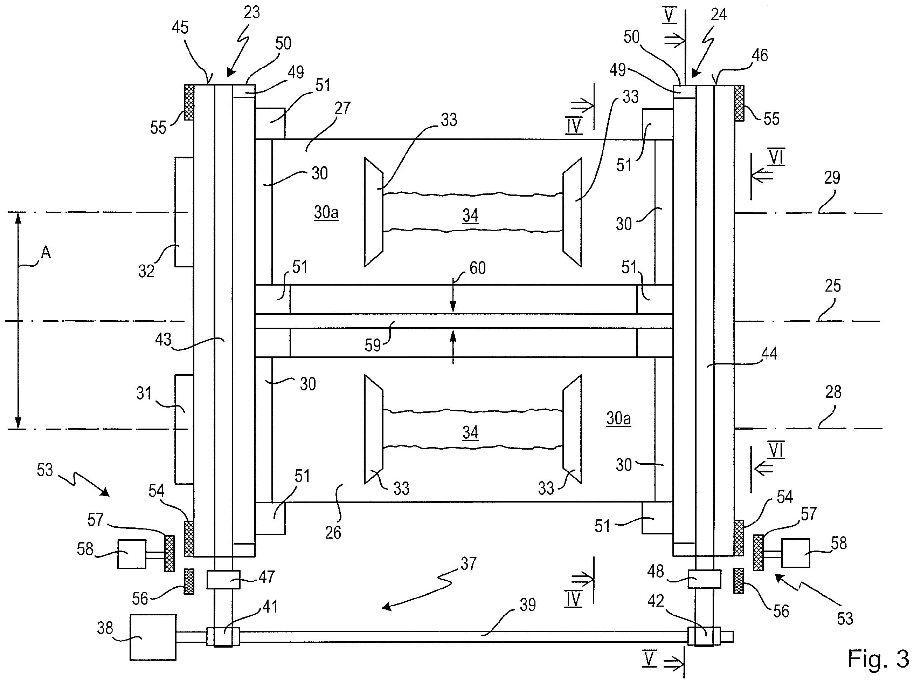

Fig. 3 zeigt eine Draufsicht auf den Werkstückwechsler 21 aus den Fig. 1 und 2, wobei analog zu Fig. 2 das Rad 23 in Fig. 3 links angeordnet ist. In der Draufsicht der Fig. 3 ist zu erkennen, dass auf den Platten 30a der Schwenktische 27, 28 Vorrichtungen 33 angeordnet sind, die zum Einspannen von Werkstücken 34 dienen, die mit den Werkzeugen 12 bearbeitet werden sollen.

Aus dem Vergleich der Fig. 1, 2 und 3 ist zu erkennen, dass sich der in Fig. 3 untere Schwenktisch 27 außerhalb des Arbeitsraumes 20 befindet, er ist in seiner Wechselposition, in der ein bearbeitetes Werkstück 34 gegen einen Rohling ausgetauscht werden kann.

Im Gegensatz dazu befindet sich der Schwenktisch 27 in seiner Arbeitsposition 36, wurde also in den Arbeitsraum 20 hineingeschwenkt, so dass dort jetzt das auf ihn aufgespannte Werkstück 34 bearbeitet werden kann.

Um die Schwenktische 26 und 27 zwischen der Wechselposition 35 und der Arbeitsposition 36 verschwenken zu können, sind die Räder 23 und 24 mit einem neben und unterhalb der Räder 23, 24 angeordneten Drehantrieb 37 verbunden, der einen Drehmotor 38 aufweist, der eine Antriebswelle 39 antreibt, die sich parallel zu der Drehachse 25 erstreckt.

Auf der Antriebswelle 39 sitzen zwei Antriebsritzel 41 und 42, die jeweils von einem als Zugmittelelement dienenden Zahnriemen 43 bzw. 44 umschlungen sind, der jeweils um eine ringförmige Umfangsfläche 45 bzw. 46 der Räder 23 bzw. 24 herum verläuft.

Zum Spannen der Zahnriemen 43 bzw. 44 ist zwischen den Rädern 23 bzw. 24 sowie den Ritzeln 41 bzw. 42 jeweils eine Spannrolle 47 bzw. 48 angeordnet.

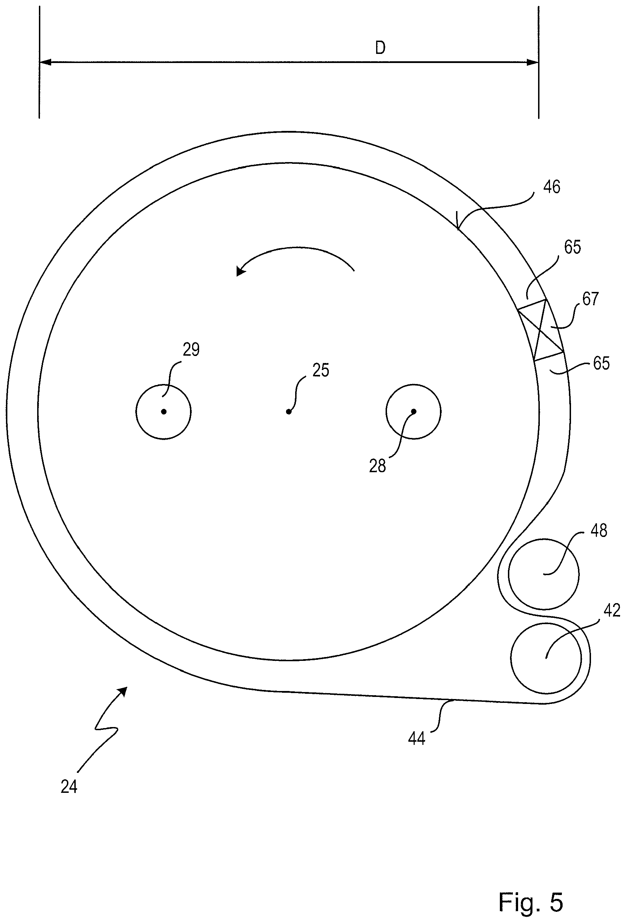

Die verschlungene Anordnung des Zahnriemens 44 auf dem Rad 24 ist besonders gut auch in Fig. 2 zu erkennen. Aus Fig. 2 ergibt sich ferner, dass der gesamte Drehantrieb 37 quasi unterhalb der Außenkontur der Räder 23, 24 angeordnet ist. In Fig. 3 wurde aus Gründen der Übersichtlichkeit der Drehantrieb außerhalb der Kontur dargestellt, die räumlich korrekte Anordnung ist jedoch in Fig. 5 gezeigt, die nachstehend noch erörtert wird.

In Fig. 3 sowie in Fig. 2 ist noch zu erkennen, dass an den Rädern 23 bzw. 24 eine ringförmige Führungsschiene 49 vorgesehen ist, die zentrisch zu der Drehachse 25 angeordnet ist und die Form eines kurzen Zylinders aufweist.

Die ringförmigen Führungsschienen 49 sind sozusagen an einem Rand 50 der Räder 23 und 24 angeordnet, die daher über ihren Rand 50 an einem Strukturelement 51 des Gestells 16 der Werkzeugmaschine gelagert sind, wie dies besser in den Fig. 1, 2 und 4 zu erkennen ist.

In Fig. 3 ist ferner zu erkennen, dass jedem Rad 23, 24 eine Indexiervorrichtung 53 zugeordnet ist, die an jedem Rad 23, 24 zwei mitfahrende Zahnstangensegmente 54 und 55 umfasst. Jedes Zahnstangensegment 54 bzw. 55 ist einem Schwenktisch 26, 27 zugeordnet, und zwar über Kreuz, wie dies nachstehend noch erläutert wird.

Jede Indexiervorrichtung 53 umfasst ferner ein ortsfestes, also stationäres Zahnstangensegment 56, das parallel zu den Rädern 23, 24 angeordnet ist.

In Fig. 3 ist die Situation gezeigt, in der die Zahnstangensegmente 54, die der Arbeitsposition 36 des Schwenktisches 27 zugeordnet sind, in Ausrichtung zu den stationären Zahnstangensegmenten 56 liegen.

Um die mitfahrenden Zahnstangensegmente 54 jetzt mit den stationären Zahnstangensegmenten 56 zu verriegeln, ist in jeder Indexiervorrichtung 53 ein längs verschiebliches Zahnstangensegment 57 vorgesehen, das über einen Stellantrieb 58 in Eingriff mit beiden Zahnstangensegmenten 54, 56 gebracht werden kann.

Sobald dieser Eingriff erfolgt ist, sind die Räder 23, 24 indexiert, sie lassen sich also nicht mehr um ihre Drehachse 25 verstellen.

Die Zahnstangensegmente 54, 55, 56, 57 stellen ein Ausführungsbeispiel für Formschlusselemente da, die in der Indexiervorrichtung 53 verwendet werden können.

Wenn die Schwenktische 26, 27 ihre Positionen vertauschen sollen, müssen die Räder 23, 24 in ihre jeweils andere Winkellage gebracht werden. Dazu werden zunächst die Indexiervorrichtungen 53 außer Eingriff gebracht, indem die Stellantriebe 58 die längs verschieblichen Zahnstangensegmente 57 zurückziehen. Danach wird über den Drehmotor 38 die Antriebswelle 39 und über diese dann mittels der Zahnriemen 43, 44 die Räder 23, 24 um 180° gedreht, so dass der Schwenktisch 26 jetzt in die Arbeitsposition 36 gelangt.

Um die Räder lagegenau und unverdrehbar in der neuen Winkellage zu fixieren, greifen jetzt die längs verschieblichen Zahnstangensegmente 57 in die mitfahrenden Zahnstangensegmente 55, die der Arbeitsposition des Schwenktisches 26 zugeordnet sind, sowie in die stationären Zahnstangensegmente 56 ein.

Gleichzeitig mit dem Drehen der Räder 23 und 24 müssen die Schwenktische 26, 27 um ihre Schwenkachsen 28, 29 geschwenkt werden, damit die Werkstücke 34 in Fig. 3 wieder nach oben zeigen.

In Fig. 3 ist noch zu erkennen, dass zwischen den beiden Rädern 23, 24 eine aussteifende Trennwand 59 vorgesehen ist, die eine sehr geringe Dicke 60 aufweist, so dass die Schwenkachsen 28, 29 einen Abstand A zueinander aufweisen können, der lediglich durch die Störkonturen der Werkstücke 34 sowie die Abmaße der Schwenktische 26, 27 bedingt ist.

Auf diese Weise sind die Außenabmaße des neuen Werkstückwechslers 21 in Richtung der Y-Richtung aus Fig. 1 auf den Durchmesser D der Räder 23, 24 begrenzt, wie es sich insbesondere aus Fig. 1 ergibt.

Auch die Breite B der Vorrichtung ist im Wesentlichen durch den Abstand der Räder 23, 24 zueinander bedingt, die Indexiervorrichtung 43 sowie der Drehantrieb 37 tragen zu der Breite B nur unmerklich bei, wie sich aus der Fig. 2 ergibt.

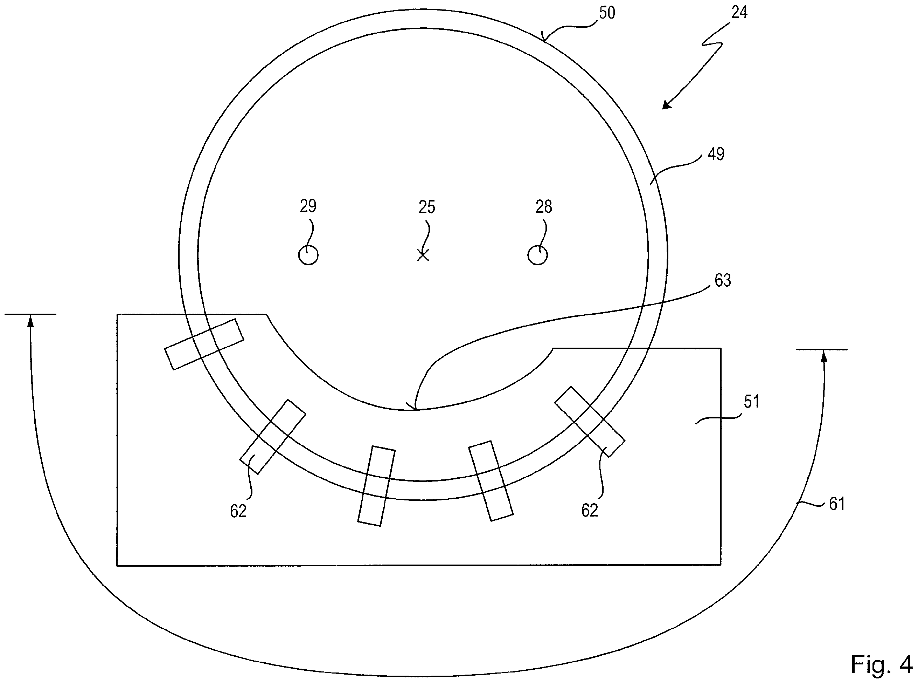

In Fig. 4 ist die Werkzeugmaschine aus Fig. 3 in einer Ansicht längs der Linie IV-IV aus Fig. 3 gezeigt. Das Rad 24 ist mit seiner ringförmigen Führungsschiene 49 an einem gebogenen Strukturelement 51 gelagert, das das Rad 24 mit einem Überdeckungswinkel 61 überdeckt, der deutlich kleiner als 180° ist. Im vorliegenden Fall liegt der Überdeckungswinkel bei ca. 120°.

An dem Strukturelement 51 sind beispielhaft fünf Führungsschuhe 62 gezeigt, in denen die ringförmige Führungsschiene 49 gelagert ist, die durch die Führungsschuhe 62 folglich in dem Überdeckungswinkel 61 überdeckt wird.

Das Strukturelement 51 weist eine halbkreisförmige Aussparung 63 auf, die auf die Drehachse 25 des Rades 24 zu weist. Auf diese Weise wird der größte Teil der Fläche des Rades 24 nicht von dem Strukturelement 51 bedeckt.

In Fig. 5 ist schematisch das Rad 24 längs der Linie X-X aus Fig. 3 dargestellt. Der Darstellung der Fig. 5 ist zu entnehmen, dass sozusagen unterhalb des Rades 24, also innerhalb seines Durchmesser D die Spannrolle 48 sowie das Antriebsritzel 42 angeordnet sind. Ferner ist zu erkennen, dass der Zahnriemen 44 mit seinem ersten Ende 65 sowie seinem zweiten Ende 66 über ein Befestigungsmittel 67 an der Umfangsfläche 46 des Rades 24 angeordnet ist.

Auf diese Weise ist es möglich, das Rad 24 aus der in Fig. 5 gezeigten Position um 180° gegen den Uhrzeigersinn um die Drehachse 25 zu verdrehen, und entsprechend natürlich auch zurückzudrehen.

Wie bereits erwähnt, werden zusammen mit dem Drehen der Räder 23, 24 um ± 180° auch die Schwenktische 26, 27 jeweils um 180° hin- oder hergedreht, wobei die Schwenktische auch während sie sich in ihrer Arbeitsposition 36 befinden, verschwenkt werden können, um eine Bearbeitung der Werkstücke 34 unter einem schrägen Winkel zu ermöglichen.

Die Energieversorgung der Schwenkantriebe 31, 32 erfolgt über die in Fig. 1 erkennbare Energiekette 22, wobei in Fig. 1 zwei weitere Energieketten 68, 69 gezeigt sind, die nicht der Versorgung der Schwenkantriebe 31, 32 sondern der Versorgung der Vorrichtungen 33 auf den Schwenktischen 26, 27 dienen.

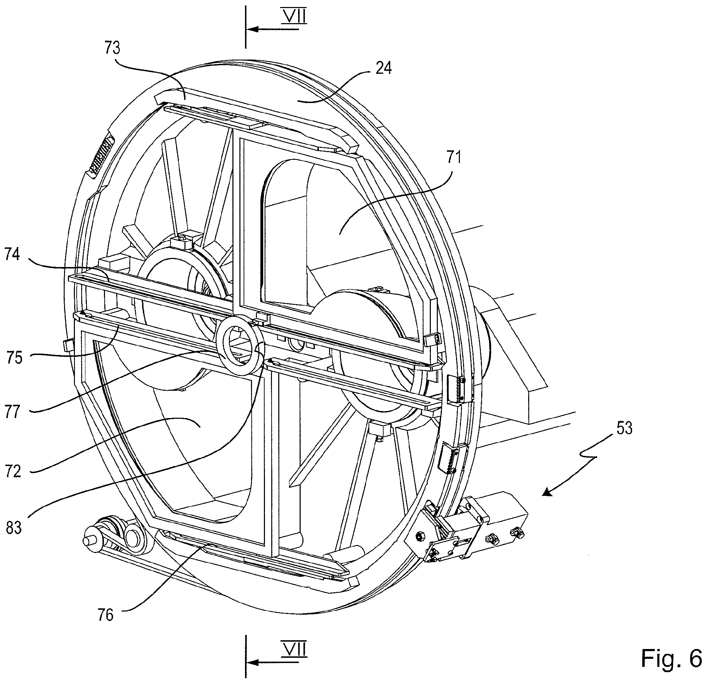

In Fig. 6 ist eine Draufsicht auf das Rad 24 längs der Linie VI-VI aus Fig. 3 gezeigt.

Das Rad 24 ist mit zwei verschiebbaren Fenstern 71, 72 versehen, die zwischen Führungen 73 und 74 bzw. 75 und 76 verschiebbar gelagert sind.

Zwischen den Führungen 74 und 75 ist ein ringförmiges Sperrteil 77 vorgesehen, das mit zwei Anschlägen 78, 79 zusammenwirkt, die an den Fenstern 71 bzw. 72 vorgesehen sind.

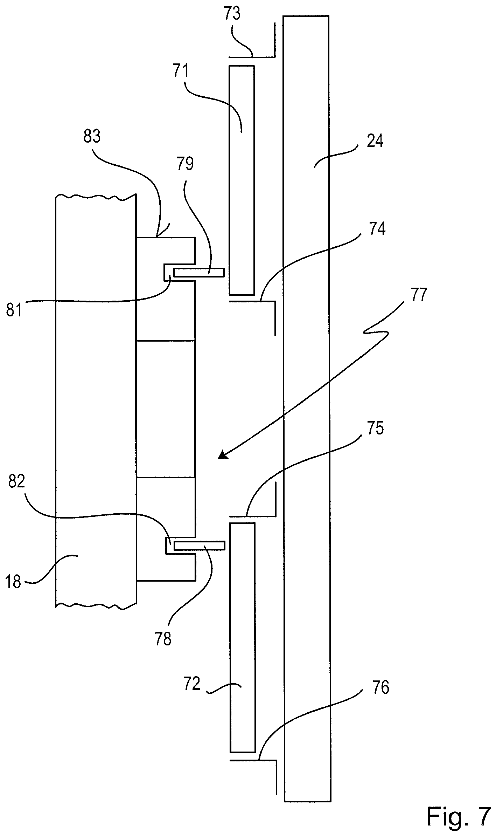

Wie aus der Schnittdarstellung in Fig. 7 längs der Linie VII-VII aus Fig. 6 zu entnehmen ist, ist das Sperrteil 77 an der Gehäusewand 18 angeordnet, die in Fig. 1 nur weggebrochen gezeigt ist. Das Sperrteil 77 ist hier als Ring ausgebildet, es kann aber auch als Scheibe ausgebildet sein.

In der in Fig. 6 und 7 gezeigten Position liegen die Anschläge 78, 79 auf der Höhe von Nuten 81, 82 in dem Sperrteil 77, so dass die Fenster 71, 72 in den Führungen 73, 74, 75, 76 verschoben werden können. Sobald jedoch das Rad 24 sich nur geringfügig um seine Drehachse 25 verdreht hat, liegen die Anschläge 78, 79 auf einer Umfangsfläche 83 des Sperrteiles 77 auf, so dass die Fenster 71, 72 nicht verschoben werden können, und sich auch nicht von selbst durch ihr Gewicht verschieben, wenn die Räder 23, 24 verdreht werden.

## Patentansprüche

1. Werkstückwechsler für eine Werkzeugmaschine (10) mit einer Werkzeugspindel (11), in die Werkzeuge (12) zur Bearbeitung von Werkstücken (34) einspannbar sind, mit zwei parallel zueinander angeordneten Rädern (23, 24), die um eine Drehachse (25) in zumindest zwei Winkelposition drehbar sind, zumindest zwei Schwenktischen (26, 27) zum Aufspannen von Werkstücken (34), wobei die Schwenktische (26, 27) zwischen den Rädern (23, 24) angeordnet und an diesen jeweils um eine Schwenkachse (28, 29) schwenkbar gelagert sind, die parallel zu der Drehachse (25) verläuft, und wobei sich in jeder Winkelposition einer der Schwenktische (26, 27) in seiner Arbeitsposition (36) befindet, in der aufgespannte Werkstücke (34) mit den Werkzeugen (12) bearbeitbar sind,
**dadurch gekennzeichnet, dass** die beiden Räder (23, 24) an ihrem Rand (50) gelagert sind.

2. Werkstückwechsler nach Anspruch 1, **dadurch gekennzeichnet, dass** jedes Rad (23, 24) eine zentrisch zu der Drehachse (25) verlaufende ringförmige Führungsschiene (49) aufweist, die in Führungsschuhen (62) läuft, die an einem Strukturelement (51) der Werkzeugmaschine (10) befestigt sind.

3. Werkstückwechsler nach Anspruch 2, **dadurch gekennzeichnet, dass** die Führungsschuhe (62) mit einem auf die Führungsschiene (49) bezogenen Überdeckungswinkel (51) kleiner 180° an dem Strukturelement (51) befestigt sind.

4. Werkstückwechsler nach einem der Ansprüche 1 bis 3, **dadurch gekennzeichnet, dass** jedes Rad (23, 24) über einen an seiner ringförmigen Umfangsfläche (45, 46) angreifenden Drehantrieb (37) um die Drehachse (25) verdrehbar ist.

5. Werkstückwechsler nach Anspruch 4, **dadurch gekennzeichnet, dass** jedes Rad (23, 24) mit einem zumindest teilweise längs seiner Umfangsfläche (45, 46) verlaufenden Zugmittelelement (43, 44) versehen ist, das mit einem Antriebsritzel (41, 42) des Drehantriebs (37) zusammenwirkt.

6. Werkstückwechsler nach Anspruch 5, **dadurch gekennzeichnet, dass** das Zugmittelelement (43, 44) mit seinen beiden Enden (65, 66) an der Umfangsfläche (45, 46) des Rades (23, 24) festgelegt ist und das Antriebsritzel (41, 42) umschlingt.

7. Werkstückwechsler nach einem der Ansprüche 4 bis 6, **dadurch gekennzeichnet, dass** der Drehantrieb (37) einen Drehmotor (38) aufweist, der eine Antriebswelle (39) antreibt, auf der zwei Antriebsritzel (41, 42) sitzen, über die die beiden Räder (23, 24) um die Drehachse (25) angetrieben werden.

8. Werkstückwechsler nach einem der Ansprüche 1 bis 7, **dadurch gekennzeichnet, dass** zumindest einem der beiden Räder (23, 24) eine Indexiervorrichtung (53) zugeordnet ist, die das Rad (23, 24) in den Winkelpositionen fixiert.

9. Werkstückwechsler nach Anspruch 8, **dadurch gekennzeichnet, dass** die Indexiervorrichtung (53) zwei an dem Rad (23, 24) angeordnete, mitfahrende Formschlusselemente (54, 55) umfasst, die jeweils einer Arbeitsposition (36) eines Schwenktisches (26, 27) zugeordnet sind, und denen ein ortsfestes Formschlusselement (56) zugeordnet ist, mit dem das mitfahrende Formschlusselement (54, 55) verriegelbar ist, dessen zugeordneter Schwenktisch (26, 27) sich in seiner Arbeitsposition (36) befindet.

10. Werkstückwechsler nach Anspruch 9, **dadurch gekennzeichnet, dass** die Indexiervorrichtung (53) ein längsverschieblich gelagertes Formschlusselement (57) umfasst, das mit dem mitfahrenden Formschlusselement (54, 55), dessen zugeordneter Schwenktisch (26, 27) sich in seiner Arbeitsposition (36) befindet, und dem ortsfesten Formschlusselement (56) in Eingriff bringbar ist.

11. Werkstückwechsler nach einem der Ansprüche 1 bis 10, **dadurch gekennzeichnet, dass** zumindest an einem der beiden Räder (23, 24) eine sich beim Drehen der Räder (23, 24) um die Drehachse (25) auf- bzw. abwickelnde Energiekette (22) vorgesehen ist, über die der Werkstückwechsler mit Energie und/oder Medien versorgt wird.

12. Werkstückwechsler nach einem der Ansprüche 1 bis 11, **dadurch gekennzeichnet, dass** jedem Schwenktisch (26, 27) ein Schwenkantrieb (31, 32) zugeordnet ist, der an einem der beiden Räder (23, 24) gelagert ist.

13. Werkstückwechsler nach Anspruch 12, **dadurch gekennzeichnet, dass** an dem einen Rad (23, 24) für jeden Schwenktisch (26, 27) eine sich beim Schwenken des Schwenktisches (26, 27) um ihre jeweilige Schwenkachse (28, 29) auf- bzw. abwickelnde Energiekette (68, 69) vorgesehen ist, über die Vorrichtungen (33) auf dem jeweiligen Schwenktisch (26, 27) mit Energie und/oder Medien versorgt werden.

14. Werkstückwechsler nach einem der Ansprüche 1 bis 13, **dadurch gekennzeichnet, dass** zwischen den Rädern (23, 24) zumindest eine Trennwand (59) vorgesehen ist, die den in Arbeitsposition (36) befindlichen Schwenktisch (26, 27) von dem zumindest einen anderen Schwenktisch (27, 26) abtrennt.

15. Werkstückwechsler nach Anspruch 14, **dadurch gekennzeichnet, dass** die zumindest eine Trennwand (59) mit beiden Rädern (23, 24) verbunden ist und den Werkstückwechsler versteift.

16. Werkstückwechsler nach einem der Ansprüche 1 bis 15, **dadurch gekennzeichnet, dass** in zumindest einem der beiden Räder (23, 24) für jeden Schwenktisch (26, 27) ein Fenster (71, 72) vorgesehen ist, durch das der Schwenktisch (26, 27) beobachtbar ist.

17. Werkstückwechsler nach Anspruch 16, **dadurch gekennzeichnet, dass** das Fenster (71, 72) verschiebbar an dem Rad (23, 24) gelagert ist.

18. Werkstückwechsler nach Anspruch 17, **dadurch gekennzeichnet, dass** an dem Fenster (71, 72) ein Anschlag (78, 79) vorgesehen ist, der mit einem Sperrteil (77) zusammenwirkt, das ein Verschieben des Fensters (71, 72) nur zulässt, wenn sich die Räder (23, 24) in einer Winkelposition befinden.

19. Werkstückwechsler nach Anspruch 18, **dadurch gekennzeichnet, dass** das Sperrteil (77) ortsfest an einer Gehäusewand (18) angeordnet ist.

20. Werkstückwechsler nach Anspruch 19, **dadurch gekennzeichnet, dass** das Sperrteil (77) als Ring (77) oder Scheibe ausgebildet ist, an dessen Umfangsfläche (83) der Anschlag beim Drehen der Räder (23, 24) anliegt, wobei in dem Ring (77) zumindest eine Nut (81, 82) für den Anschlag (78, 79) vorgesehen ist, die ein Verschieben des Fensters (71, 72) ermöglicht, wenn sich die Räder (23, 24) in einer Winkelposition befinden.

21. Werkzugmaschine mit einer Werkzeugspindel (11), in die Werkzeuge (12) zur Bearbeitung von Werkstücken (34) einspannbar sind, und mit einem Werkstückwechsler (21) nach einem der Ansprüche 1 bis 20.

## Claims

1. Workpiece changer for a machine tool (10) with a tool spindle (11) into which tools (12) can be clamped for machining of workpieces (34), with two wheels (23, 24) which are arranged parallel to one another and which are rotatable about an axis of rotation (25) into at least two angular positions, with at least two swivel tables (26, 27) for clamping workpieces (34), the swivel tables (26, 27) being arranged between the wheels (23, 24) and being each mounted in a swivelling manner on said wheels about a swivel axis (28, 29), which swivel axis runs parallel to the axis of rotation (25), and wherein in each angular position one of the swivel tables (26, 27) is located in its working position (36) in which clamped workpieces (34) can be machined with the tools (12),
**characterized in that** both wheels (23, 24) are supported at their rim (50).

2. Workpiece changer according to Claim 1, **characterized in that** each wheel (23, 24) comprises an annular guide rail (49) extending centrally with respect to the axis of rotation (25) and running in guide shoes (62) which are fastened to a structural element (51) of the machine tool (10).

3. Workpiece changer according to Claim 2, **characterized in that** the guide shoes (62) are fastened to the structural element (51) with an overlap angle (51) in relation to the guide rail (49) of less than 180°.

4. Workpiece changer according to anyone of Claims 1 to 3, **characterized in that** each wheel (23, 24) is rotatable about the axis of rotation (25) via a rotary drive (37) engaging on the annular circumferential surface (45, 46) of said wheel.

5. Workpiece changer according to Claim 4, **characterized in that** each wheel (23, 24) is provided with a traction means element (43, 44) which extends at least partially along the circumferential surface (45, 46) of said wheel, which traction means element (43, 44) interacts with a drive pinion (41, 42) of the rotary drive (37).

6. Workpiece changer according to Claim 5, **characterized in that** the traction means element (43, 44) is fixed with both its ends (65, 66) to the circumferential surface (45, 46) of the wheel (23, 24) and loops around the drive pinion (41, 42).

7. Workpiece changer according to anyone of Claims 4 to 6, **characterized in that** the rotary drive (37) comprises a rotating motor (38) which drives a drive shaft (39) on which two drive pinions (41, 42) sit via which both wheels (23, 24) are driven about the axis of rotation (25).

8. Workpiece changer according to anyone of Claims 1 to 7, **characterized in that** an indexing device (53) is associated at least to one of the two wheels (23, 24), which indexing device (53) fixes the wheel (23, 24) in the angular positions.

9. Workpiece changer according to Claim 8, **characterized in that** the indexing device (53) comprises two onboard positive-locking elements (54, 55) which are arranged on the wheel (23, 24) and are each associated to a working position (36) of a swivel table (26, 27), and to which is associated a stationary positive-locking element (56) with which that onboard positive-locking element (54, 55) can be locked, the assigned swivel table (26, 27) of which is located in its working position (36).

10. Workpiece changer according to Claim 9, **characterized in that** the indexing device (53) comprises a longitudinally displaceably mounted positive-locking element (57) which can be brought into engagement with that onboard positive-locking element (54, 55), the assigned swivel table (26, 27) of which is located in its working position (36), and which can be brought into engagement with the stationary positive-locking element (56).

11. Workpiece changer according to anyone of Claims 1 to 10, **characterized in that** at least at one of the two wheels (23, 24) an energy chain (22) is provided which winds on and off during rotation of the wheels (23, 24) about the axis of rotation (25), via which energy chain the workpiece changer is supplied with energy and/or media.

12. Workpiece changer according to anyone of Claims 1 to 11, **characterized in that** a swivelling drive (31, 32) is associated to each swivel table (26, 27), which swivelling drive (31, 32) is mounted on one of the two wheels (23, 24).

13. Workpiece changer according to Claim 12, **characterized in that** for each swivel table (26, 27) there is provided at said one wheel (23, 24) an energy chain (68, 69) which winds on or off during swivelling of the swivel table (26, 27) about its respective swivel axis (28, 29), via which energy chain (68, 69) devices (33) on the respective swivel table (26, 27) are supplied with energy and/or media.

14. Workpiece changer according to anyone of Claims 1 to 13, **characterized in that** at least one separating wall (59) is provided between the wheels (23, 24), which separating wall (59) separates the swivel table (26, 27) located in working position (36) from the at least one other swivel table (27, 26).

15. Workpiece changer according to Claim 14, **characterized in that** the at least one separating wall (59) is connected to both wheels (23, 24) and reinforces the workpiece changer.

16. Workpiece changer according to anyone of Claims 1 to 15, **characterized in that** for each swivel table (26, 27) a window (71, 72) is provided in at least one of the two wheels (23, 24), through which window (71, 72) the swivel table (26, 27) can be observed.

17. Workpiece changer according to Claim 16, **characterized in that** the window (71, 72) is mounted displaceably on the wheel (23, 24).

18. Workpiece changer according to Claim 17, **characterized in that** there is provided on the window (71, 72) a stop (78, 79) which interacts with a locking part (77) which only allows a displacement of the window (71, 72) when the wheels (23, 24) are located in one angular position.

19. Workpiece changer according to Claim 18, **characterized in that** the locking part (77) is arranged stationary on a housing wall (18).

20. Workpiece changer according to Claim 19, **characterized in that** the locking part (77) is formed as a ring (77) or disc against the circumferential surface (83) of which the stop bears during rotation of the wheels (23, 24), at least one groove (81, 82) for the stop (78, 79) being provided in the ring (77), which groove (81, 82) enables a displacement of the window (71, 72) when the wheels (23, 24) are located in one angular position.

21. Machine tool with a tool spindle (11) into which tools (12) can be clamped for machining workpieces (34), and with a workpiece changer (21) according to anyone of Claims 1 to 20.

## Revendications

1. Système de changement de pièces pour une machine-outil (10) comprenant une broche porte-outil (11), dans laquelle des outils (12) servant à usiner des pièces (34) peuvent être enserrés, comprenant deux roues (23, 24) disposées de manière parallèle l'une par rapport à l'autre, lesquelles peuvent tourner autour d'un axe de rotation (25) dans au moins deux positions angulaires, au moins deux plateaux de pivotement (26, 27) servant à tendre des pièces (34), dans lequel les plateaux de pivotement (26, 27) sont disposés entre les roues (23, 24) et sont montés au niveau de ces dernières respectivement de manière à pouvoir pivoter autour d'un axe de pivotement (28, 29), lequel s'étend de manière parallèle par rapport à l'axe de rotation (25), et dans lequel, dans chaque position angulaire, un des plateaux de pivotement (26, 27) se trouve dans sa position de travail (36), dans laquelle des pièces (34) tendues peuvent être usinées à l'aide des outils (12),
**caractérisé en ce que** les deux roues (23, 24) sont montées au niveau de leur bord (50).

2. Système de changement de pièces selon la revendication 1, **caractérisé en ce que** chaque roue (23, 24) présente un rail de guidage (49) de forme annulaire s'étendant de manière centrée par rapport à l'axe de rotation (25), lequel circule dans des patins de guidage (62), qui sont fixés au niveau d'un élément de structure (51) de la machine-outil (10).

3. Système de changement de pièces selon la revendication 2, **caractérisé en ce que** les patins de guidage (62) sont fixés au niveau de l'élément de structure (51) avec un angle de recouvrement (51), par rapport au rail de guidage (49), inférieur à 180°.

4. Système de changement de pièces selon l'une quelconque des revendications 1 à 3, **caractérisé en ce que** chaque roue (23, 24) peut tourner autour de l'axe de rotation (25) par l'intermédiaire d'un entraînement en rotation (37) s'engageant au niveau de sa surface périphérique (45, 46) de forme annulaire.

5. Système de changement de pièces selon la revendication 4, **caractérisé en ce que** chaque roue (23, 24) est pourvue d'un élément formant moyen de traction (43, 44) s'étendant au moins en partie le long de sa surface périphérique (45, 46), lequel élément formant moyen de traction coopère avec un pignon d'entraînement (41, 42) de l'entraînement en rotation (37).

6. Système de changement de pièces selon la revendication 5, **caractérisé en ce que** l'élément formant moyen de traction (43, 44) est placé fixement, par ses deux extrémités (65, 66), au niveau de la surface périphérique (45, 46) de la roue (23, 24) et entoure le pignon d'entraînement (41,42).

7. Système de changement de pièces selon l'une quelconque des revendications 4 à 6, **caractérisé en ce que** l'entraînement en rotation (37) présente un moteur de rotation (38), qui entraîne un arbre d'entraînement (39), sur lequel sont calés deux pignons d'entraînement (41, 42), par l'intermédiaire desquels les deux roues (23, 24) sont entraînées autour de l'axe de rotation (25).

8. Système de changement de pièces selon l'une quelconque des revendications 1 à 7, **caractérisé en ce qu'**un dispositif d'indexation (53) est associé à au moins une des deux roues (23, 24), lequel fixe la roue (23, 24) dans les positions angulaires.

9. Système de changement de pièces selon la revendication 8, **caractérisé en ce que** le dispositif d'indexation (53) comprend deux éléments à complémentarité de forme (54, 55) disposés au niveau de la roue (23, 24), entraînés en mouvement, lesquels sont associés respectivement à une position de travail (36) d'un plateau de pivotement (26, 27), et auxquels est associé un élément à complémentarité de forme (56) stationnaire, à l'aide duquel l'élément à complémentarité de forme (54, 55) entraîné en mouvement peut être verrouillé, dont le plateau de pivotement (26, 27) associé se trouve dans sa position de travail (36).

10. Système de changement de pièces selon la revendication 9, **caractérisé en ce que** le dispositif d'indexation (53) comprend un élément à complémentarité de forme (57) monté de manière à pouvoir coulisser en longueur, lequel peut être amené en prise avec l'élément à complémentarité de forme (54, 55) entraîné en mouvement, dont le plateau de pivotement (26, 27) associé se trouve dans sa position de travail (36), et avec l'élément à complémentarité de forme (56) stationnaire.

11. Système de changement de pièces selon l'une quelconque des revendications 1 à 10, **caractérisé en ce qu'**est prévue, au moins au niveau d'une des deux roues (23, 24), une chaîne d'énergie (22) s'enroulant ou se déroulant autour de l'axe de rotation (25) lors de la rotation des roues (23, 24), par l'intermédiaire de laquelle le système de changement de pièces est alimenté en énergie et/ou en milieux.

12. Système de changement de pièces selon l'une quelconque des revendications 1 à 11, **caractérisé en ce qu'**est associé, à chaque plateau de pivotement (26, 27), un entraînement de pivotement (31, 32), qui est monté au niveau d'une des deux roues (23, 24).

13. Système de changement de pièces selon la revendication 12, **caractérisé en ce qu'**est prévue, au niveau de l'une des roues (23, 24) pour chaque plateau de pivotement (26, 27), une chaîne d'énergie (68, 69) s'enroulant ou se déroulant autour de son axe de pivotement (28, 29) respectif lors du pivotement du plateau de pivotement (26, 27), par l'intermédiaire de laquelle les dispositifs (33) sur le plateau de pivotement (26, 27) respectif sont alimentés en énergie et/ou en milieux.

14. Système de changement de pièces selon l'une quelconque des revendications 1 à 13, **caractérisé en ce qu'**est prévue, entre les roues (23, 24), au moins une paroi de séparation (59), qui sépare le plateau de pivotement (26, 27) se trouvant dans la position de travail (36) de l'au moins un autre plateau de pivotement (27, 26).

15. Système de changement de pièces selon la revendication 14, **caractérisé en ce que** l'au moins une paroi de séparation (59) est reliée aux deux roues (23, 24) et renforce le système de changement pièces.

16. Système de changement de pièces selon l'une quelconque des revendications 1 à 15, **caractérisé en ce qu'**est prévue, dans au moins une des deux roues (23, 24) pour chaque plateau de pivotement (26, 27), une fenêtre (71, 72), par laquelle le plateau de pivotement (26, 27) peut être observé.

17. Système de changement de pièces selon la revendication 16, **caractérisé en ce que** la fenêtre (71, 72) est montée de manière à pouvoir coulisser au niveau de la roue (23, 24).

18. Système de changement de pièces selon la revendication 17, **caractérisé en ce qu'**est prévue, au niveau de la fenêtre (71, 72), une butée (78, 79), qui coopère avec une partie de blocage (77), qui n'autorise un déplacement par coulissement de la fenêtre (71, 72) que lorsque les roues (23, 24) se trouvent dans une position angulaire.

19. Système de changement de pièces selon la revendication 18, **caractérisé en ce que** la partie de blocage (77) est disposée de manière stationnaire au niveau d'une paroi de boîtier (18).

20. Système de changement de pièces selon la revendication 19, **caractérisé en ce que** la partie de blocage (77) est réalisée sous la forme d'un anneau (77) ou d'un disque, au niveau de la surface périphérique (83) de laquelle la butée repose lors de la rotation des roues (23, 24), dans lequel au moins une rainure (81, 82) est prévue pour la butée (78, 79) dans l'anneau (77), laquelle rainure permet un déplacement par coulissement de la fenêtre (71, 72) quand les roues (23, 24) se trouvent dans une position angulaire.

21. Machine-outil comprenant une broche porte-outil (11), dans laquelle des outils (12) servant à usiner des pièces (34) peuvent être enserrés, et comprenant un système de changement de pièces (21) selon l'une quelconque des revendications 1 à 20.
